# EUROPEAN PATENT SPECIFICATION

(11) **EP 1 281 334 B1**
(45) Date of publication and mention of the grant of the patent: **04.05.2005**
(21) Application number: 02255289.7
(22) Date of filing: 29.07.2002
(51) Int. Cl.: A45D 40/06, B29C 45/00

(54) **Product application device**
Vorrichtung zum Auftragen eines Produktes
Dispositif d'application d'un produit

(30) Priority: 30.07.2001 GB 0118536
(43) Date of publication of application: 05.02.2003
(73) Proprietor: RPC Containers Ltd., Northampton NN10 8RP (GB)
(72) Inventor: Parkin, Derek, Newton Aycliffe, County Durham DL5 7QG (GB); Dixon, David, Heysham, Lancashire LA3 2NS (GB)
(74) Representative: Leckey, David Herbert

(56) References cited:
- WO-A-00/13914
- WO-A-94/14588
- US-A- 2 419 526

## Description

The present invention relates to product application or dispensing devices, and more particularly to a method of manufacturing such devices.

The devices to which the present invention relates typically comprise a tubular case containing a body or stick of the product. In order to be dispensed or applied, the product is advanced along the tube so as to project from the tube. After application, the product may be retracted once more into the tube. Devices of this type may be used to dispense and apply a wide range of medicinal, hygienic or cosmetic products, although most commonly they are used in the context of a lipstick, and from now on the invention will be described with reference to a lipstick.

It is desirable for a lipstick to satisfy certain criteria. For example, the lipstick should allow a consumer to apply the product in a simple and controlled manner, but act as a sealed container for the product at all other times. Although the size, in particular the diameter, of the device should be as small as possible so as to minimise its bulk, the device should still be capable of containing a relatively large quantity of the product. Furthermore, in this context it is important that the device may be manufactured relatively cheaply and efficiently.

In this regard it has been proposed in WO 00/13914 to link the pomade carrying cup of a lipstick to a base section by means of a telescopic column comprising a plurality of interengaging hexagonal sections. This mechanism is housed in an outer sleeve, provided with a spiral cam track on its inner surface. Rotation of the base part relative to the sleeve by the user results in lugs provided on the periphery of an outward flange on the uppermost telescopic section to ride in the cam track, thus extending the telescopic column and advancing the pomade cup and thus the lipstick. A similar mechanism is disclosed in US 2,419,526.

It is recognised that by avoiding the need for an additional inner sleeve, the use of a telescopic column in this way is beneficial in addressing the problem of minimising the overall diameter of the device without adversely affecting the quantity of the product which it contains. However, the Applicants have realised that conventional techniques for manufacturing such mechanisms have a number of drawbacks.

For example, in WO 00/13914, the base, telescopic column and pomade carrying cup are first moulded together in a pre-form, with each section connected to the adjacent section by means of a frangible bridge. An axial force is then applied to the pre-form to collapse it into its final form.

This technique therefore involves at least three steps: the pre-form must first be moulded, removed from the mould and then, in a separate step, collapsed to produce the device. The necessity of an additional step to collapse the pre-form clearly reduces the efficiency with which the mechanism may be manufactured, and results in an increase in the cost associated with the process. In addition it will be appreciated that a considerable degree of control and precision will be required to mould the frangible bridges. Collapsing of the column will only be possible once the material from which it has formed has cooled sufficiently for these to harden.

The present invention seeks to simplify the above process, and thus according to the present invention, there is provided a method of producing a telescopic column for a product application device, said column comprising a plurality of discrete sections; the method comprising:
providing a mould having opposed mould sections, which, with a core, define a plurality of adjacent cavities for forming respective sections of the column;
introducing a plastics material into the mould so as to form the sections;
opening the mould so as to leave the sections of the telescopic column on the core; and
withdrawing the core from the mould so as to collapse the sections of the telescopic column into interengaging relation.

In accordance with the present invention, therefore, the sections of the telescopic column are formed on the core of a mould, and it is the act of retracting the mould core from the mould that causes the sections to be collapsed and assembled into their final interengaging form. The collapsed columns may then simply be removed from the mould for subsequent assembly into the device.

The present invention therefore effectively combines the moulding and collapsing steps of the process by collapsing the column as the final stage of the moulding step, as the core is retracted from the mould. In this way, a device having the advantages of a mechanism incorporating a telescopic column may be produced, but in a more efficient and cost effective manner than conventional multi-step processes allow. Furthermore, as the column is transported in a collapsed state, there is less likelihood of damage to the column, resulting in less scrap.

Although the method of the present invention is particularly suitable for producing mechanisms for lipsticks, it should be appreciated that it is applicable to producing a telescopic column for use in a device for applying or dispensing any similar product.

For simplicity of mould manufacture, the section defining cavities on the mould are preferably provided at spaced apart positions in the mould.

The sections of the telescopic column may be of any desired cross-section, but it is preferred that they are of non-circular cross-section most preferably hexagonal, so as to prevent rotation of the sections relative to one another after the column has been collapsed. Accordingly the mould cavities are preferably non-circular, for example hexagonal.

To facilitate collapse, the mould cavities are arranged to decrease in diameter with distance from the base of the core, so that the smallest section will be drawn into the next smallest and so on in a single movement.

The sections of the telescopic column preferably include appropriate retaining means to limit the extent of axial movement possible between the sections and prevent them from becoming disengaged from one another once they have been collapsed. Accordingly suitable formations may be provided on the mould and core. To allow satisfactory assembly of the column, the core should be withdrawn while the moulded plastics is still warm so as to be sufficiently flexible to permit the formed retaining means to deform and move over one another to allow the column to collapse. After the plastics cools, the retaining means will not be able to disengage.

The retaining means may take any suitable form. For example, cooperating flanges may be provided at the ends of the adjoining sections of the column. Preferably, however, cooperating hooks are used. This arrangement has been found to be advantageous in terms of ease of collapse of the moulded sections.

Equally it may be envisaged that rather than cooperating with a hook on the adjacent section, the hook on the end of one section may be arranged to ride within a blind groove provided on the inner surface of the next lower section as the column is extended, so that when the column is fully extended, the hook will engage the end of the groove to prevent further axial movement of the sections relative to one another.

Sections which will adjoin the telescopic column in the final device, for example a base and a product supporting section such as a pomade cup, may be moulded separately and added at a later stage to the telescopic column sections. Preferably, however, such sections are moulded together with the other sections of the telescopic column for ease of assembly. The sections may then all be collapsed together on retraction of the mould core thus reducing the number of subsequent steps required to convert the collapsed column into the final device. In a preferred embodiment, the pomade cup may be integrally formed with the uppermost column section.

It will be understood that in view of the production quantities required the moulding process will, in practice, be an injection moulding process, and standard injection moulding techniques may be applied as necessary, for example applying suitable release coatings to the mould parts to facilitate removal of the sections from the mould.

It will also be understood that the invention extends to a telescopic column manufactured in accordance with the invention and also to a product application or dispensing device incorporating such a column.

Some preferred embodiments of the present invention will now be described, by way of example only, with reference to the accompanying drawings in which:
Figure 1 shows a section through a lipstick incorporating a telescopic column in accordance with the invention;
Figure 2 shows a detail of the column of Figure 1;
Figures 3A to 3D show stages in the manufacture of the telescopic column; and
Figures 4A to 4C show schematically certain stages in the manufacture process in more detail.

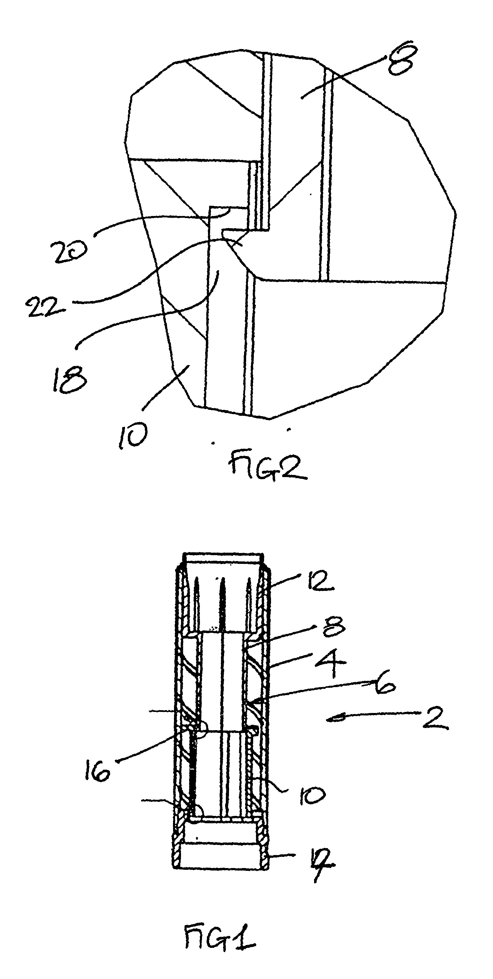

With reference firstly to Figure 1, there is shown a lipstick 2 of the general type disclosed in WO00/13914.

The lipstick comprises an outer casing 4 which contains within it a hexagonal telescopic column 6. The telescopic column 6 comprises two sections 8, 10, the upper section 8 being receivable within the lower section 10. The upper section 8 is moulded integrally with a pomade cup 12, and the lower section 10 engages within a base 14.

The lower section 10 is provided at its upper end with a radially extending flange 16 which projects towards the inner wall of the casing 4 for stability purposes.

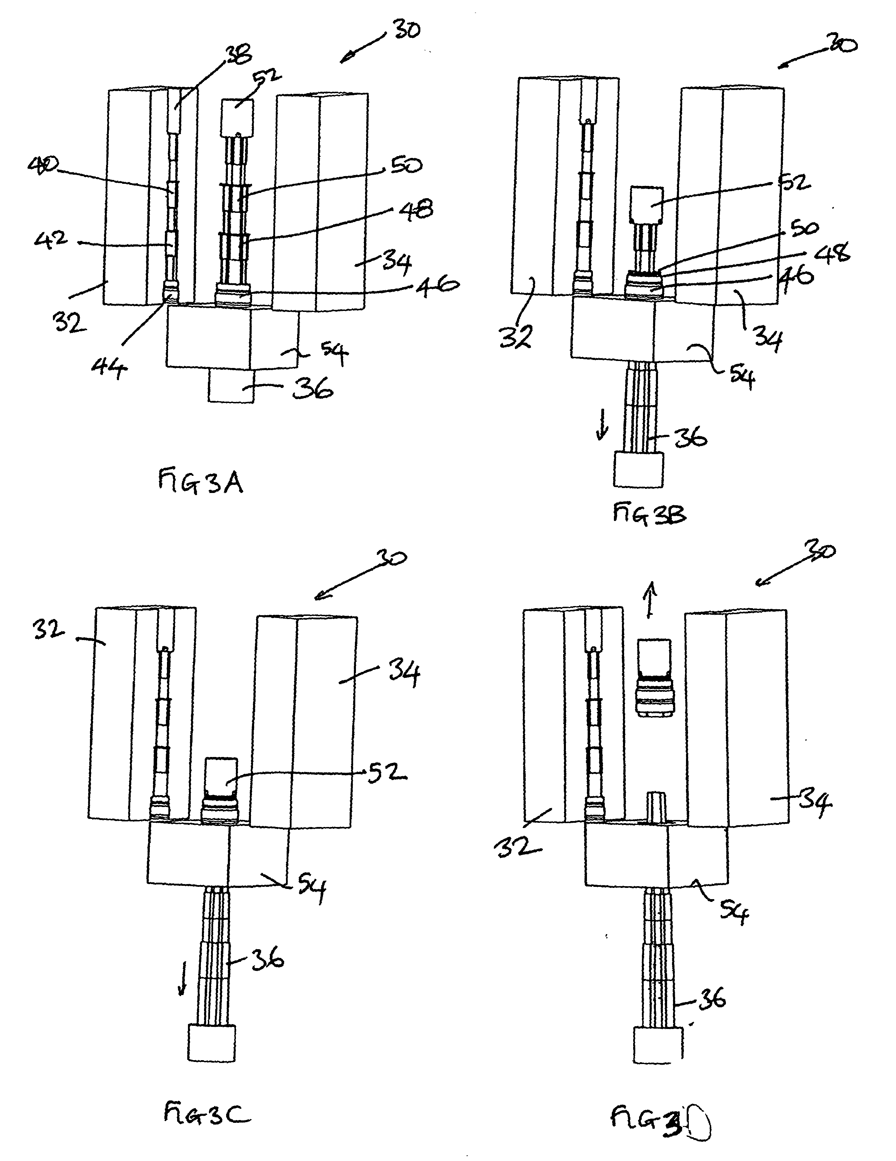

The upper column section 8 is retained within the lower column section 10 by a hook and groove arrangement as shown more clearly in Figure 2. In particular, the lower column section 10 is provided with three longitudinally extending grooves 18 (arranged in alternate walls of the section) which are closed at their upper ends by a wall 20 and the lower end of the upper column section 8 is provided with corresponding hooks 22 which extend into and are retained within the grooves 18. The lower column 10 is retained within the base 14 by a similar mechanism.

The outer casing 4 clips onto the base 14 in such a way that they are able to rotate relative to one another. The pomade cup 12 is provided with a number of pegs 24 which engage within a series of spiral grooves 26 provided on the inner wall of the outer casing 4 such that as the base is rotated relative to the outer casing 4 the pomade cup and the lipstick it contains moves upwardly an downwardly within the tube.

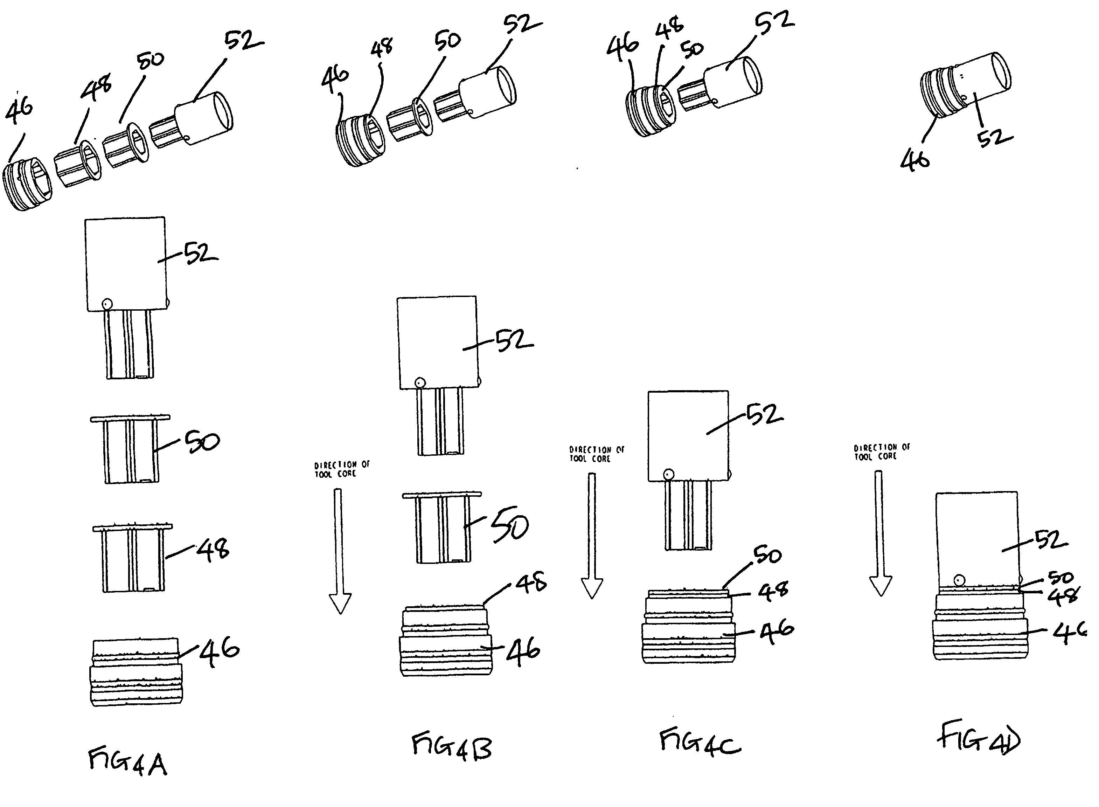

Having generally described the structure of the lipstick 2 with reference to Figures 1 and 2, Figures 3 and 4 demonstrate the method of manufacture of a telescopic column 6 suitable for use in a lipstick 2. In fact, the arrangement shown in Figures 3 and 4 illustrate a telescopic column 6 effectively having three sections rather than two as shown in Figures 1 and 2, but the same general principles of manufacture will apply irrespective of the number of column sections.

As shown in Figure 3A, a mould 30 is provided which comprises opposed mould parts 32, 34 and a core 36. The mould parts 32, 34 include formations 38, 40, 42, 44 which, with formations provided on the core 36, define a number of spaced apart cavities for forming a number of column sections, namely a base section 46, lower and upper column sections 48, 50 and a pomade cup section 52. As in the earlier embodiment, these sections all have a hexagonal cross-section.

In the initial stages of manufacture, the mould parts 32, 34 are closed around the core 36 and a suitable molten plastics material is injected into the mould to form the respective sections 46, 48, 50, 52. Then, after the plastics has cooled to a certain extent but before it has hardened, the mould parts 32, 34 are opened to leave the column sections 46, 48, 50, 52, exposed on the core 36. It will be seen that the column components are completely separate on the core 36.

The next stage in the process is that the core 36 is retracted through the base plate 54 of the mould 30. This pulls the column sections 46, 48, 50, 52 towards the base plate 54 and collapses the sections together. As seen most clearly in Figure 4B, the lower column section 48 first moves down into the base section 46 and then the upper column section 50 moves down inside the lower column section 48. Finally, as shown in Figures 3C and 4D, the pomade cup 52 collapses into the lower three parts.

As mentioned with reference to Figures 1 and 2, the various column parts are held together by interengaging hooks 22 and grooves 18. Since the plastics material is still relatively warm on the core 36, the material can deform so as to allow the hooks 22 to enter the grooves 18 as the column collapses to allow the sections to rest within one another, but once the plastic cools completely, the hooks will be unable to move out of the grooves.

Finally, the collapsed column can be removed from the mould 30, for example by a robot or by suitable ejectors, as shown in Figure 3D for subsequent assembly into the lipstick.

It will be seen from the above that the manufacture of the column sections and their assembly into a column is thus effected in a single operation which leads to significant advantages both in cost and scrap reduction.

It will be appreciated that various modifications may be made to the particular embodiments disclosed above. For example, the column sections may be retained together by means other than a hook and groove arrangement. In an alternative arrangement, the grooves 18 may be replaced by an inwardly facing flange extending continuously or intermittently around the relevant section and the hook 22 provided as a corresponding continuous or intermittent lip on the bottom end of the adjacent column. Furthermore, as mentioned above, the column may be made up of any number of column sections.

It will also be appreciated that the invention may be applied to applicators or dispensers for materials other than lipstick. For example, pasty or semi-liquid materials may be dispensed in a similar manner provided the upper section may be suitably sealed against the inside of the casing 4.

## Claims

1. A method of producing a telescopic column for a product application device, said column comprising a plurality of discrete sections (48, 50); the method comprising:
providing a mould (30) having opposed mould sections (32, 34), which, with a core (36), define a plurality of adjacent cavities for forming respective sections (48, 50) of the column;
introducing a plastics material into the mould so as to form the sections;
opening the mould so as to leave the sections of the telescopic column on the core (36); and
withdrawing the core (36) from the mould so as to collapse the sections of the telescopic column into interengaging relation.

2. A method as claimed in claim 1 wherein the column section defining cavities are provided at spaced apart positions in the mould (30).

3. A method as claimed in claim 1 or 2 wherein the mould parts (32, 34, 36) are configured to produce sections of telescopic column which are non-circular in cross-section, preferably hexagonal.

4. A method as claimed in any preceding claim wherein the mould parts (32, 34, 36) are provided with formations for defining on the column sections retaining means to limit the extent of axial movement possible between the column sections.

5. A method as claimed in claim 4 wherein said retaining means comprises cooperating flanges (16) provided at the ends of the adjoining sections (48, 50) of the column.

6. A method as claimed in claim 4 wherein said retaining means comprises interengaging hooks (22) and grooves (18).

7. A method as claimed in claim 4, 5 or 6 wherein the core (36) is withdrawn while the moulded plastics is still warm so as to be sufficiently flexible to permit the formed retaining means to deform to permit the column to collapse.

8. A method as claimed in any preceding claim wherein a base (46) of the column and a product supporting section (12) are co-moulded with the other column sections.

9. A method as claimed in claim 8 wherein the product supporting section (12) is integrally formed with the uppermost column section (8).

10. A method as claimed in any preceding claim wherein the moulding is injection moulding.

11. A method as claimed in any preceding claim wherein the product is a lipstick.

## Patentansprüche

1. Verfahren zum Herstellen einer Teleskopsäule für eine Produktanwendungsvorrichtung, wobei die Säule eine Mehrzahl von diskreten bzw. einzelnen Abschnitten (48, 50) aufweist, wobei das Verfahren umfasst:
Bereitstellen einer Form (30) mit gegenüberliegenden Formabschnitten (32, 34), die mit einem Kern (36) eine Mehrzahl von benachbarten Hohlräumen zum Bilden jeweiliger Abschnitte (48, 50) der Säule definieren,
Einführen eines Kunststoffmaterials in die Form, um die Abschnitte zu bilden,
Öffnen der Form, um die Abschnitte der Teleskopsäule auf dem Kern (36) zu lassen, und
Entnehmen des Kerns (36) aus der Form, um die Abschnitte der Teleskopsäule in eine ineinandergreifende Beziehung zusammenzuklappen.

2. verfahren nach Anspruch 1, bei dem die einen Säulenabschnitt definierenden Hohlräume an beabstandeten Stellen in der Form (30) vorgesehen sind.

3. Verfahren nach Anspruch 1 oder 2, bei dem die Formteile (32, 34, 36) konfiguriert sind, um Abschnitte der Teleskopsäule herzustellen, die nichtkreisförmig im Querschnitt sind, vorzugsweise hexagonal.

4. verfahren nach einem der vorstehenden Ansprüche, bei dem die Formteile (32, 34, 36) mit Ausbildungen bzw. Formationen bereitgestellt sind, um auf den Säulenabschnitten Haltemittel zu definieren, um das Ausmaß einer axialen Bewegung, die zwischen den Säulenabschnitten möglich ist, zu beschränken.

5. Verfahren nach Anspruch 4, bei dem das Haltemittel zusammenwirkende Flansche (16) aufweist, die an den Enden der benachbarten Abschnitten (48, 50) der Säule vorgesehen sind.

6. Verfahren nach Anspruch 4, bei dem das Haltemittel ineinandergreifende Haken (22) und Nuten (18) aufweist.

7. Verfahren nach Anspruch 4, 5 oder 6, bei dem der Kern (36) entnommen wird, während der geformte Kunststoff noch warm ist, um ausreichend flexibel zu sein, um zu ermöglichen, dass das gebildete Haltemittel verformt, um der Säule zu ermöglichen, zusammenzuklappen.

8. Verfahren nach einem der vorstehenden Ansprüche, bei dem eine Basis (46) der Säule und ein Produkthalteabschnitt (12) mit den anderen Säulenabschnitten zusammen geformt werden.

9. Verfahren nach Anspruch 8, bei dem der Produkthalteabschnitt (12) integral bzw. einstückig mit dem obersten Säulenabschnitt (18) gebildet wird.

10. Verfahren nach einem der vorstehenden Ansprüche, bei dem das Formen ein Spritzgießformen ist.

11. Verfahren nach einem der vorstehenden Ansprüche, bei dem das Produkt ein Lippenstift ist.

## Revendications

1. Procédé pour produire une colonne télescopique pour un dispositif d'application de produit, ladite colonne comprenant une pluralité de sections discrètes (48, 50) ;
ce procédé comprenant les étapes consistant à :
prévoir un moule (30) ayant des sections de moule opposées (32, 34) qui, avec un noyau (36), définissent une pluralité de cavités adjacentes pour former des sections respectives (48, 50) de la colonne ;
introduire un matériau plastique dans le moule de façon à former les sections ;
ouvrir le moule de façon à laisser les sections de la colonne télescopique dans le noyau (36) ; et
retirer le noyau (36) du moule de façon à faire se replier les sections de la colonne télescopique en relation d'engagement réciproque.

2. Procédé selon la revendication 1, dans lequel la section de colonne définissant des cavités sont prévues à des positions spatialement espacées dans le moule (30).

3. Procédé selon la revendication 1 ou 2 dans lequel les parties moulées (32, 34, 36) sont configurées pour produire des sections de colonne télescopique qui sont de section non circulaire, de préférence hexagonale.

4. Procédé selon l'une des revendications précédentes, dans lequel les parties moulées (32, 34, 36) sont pourvues de formations pour définir sur la colonne des moyens de maintien pour limiter l'étendue du mouvement axial possible entre les sections de colonne.

5. Procédé selon la revendication 4 dans lequel lesdits moyens de maintien comprennent des flasques coopérants (16) disposés aux extrémités des sections adjacentes (48, 50) de la colonne.

6. Procédé selon la revendication 4 dans lequel lesdits moyens de maintien comprennent des crochets (22) et des rainures (18) en engagement réciproque.

7. Procédé selon la revendication 4, 5 ou 6 dans lequel le noyau (36) est retiré pendant que les plastiques moulés sont encore chauds de façon à rester suffisamment souples pour permettre aux moyens de maintien formés de se déformer et permettre à la colonne de se replier.

8. Procédé selon l'une des revendications précédentes, dans lequel une base (46) de la colonne et une section de support de produit (12) sont co-moulées avec les autres sections de colonne.

9. Procédé selon la revendication e dans lequel la section de support de produit (12) est intégralement formée avec la section de colonne supérieure (18).

10. Procédé selon l'une des revendications précédentes, dans lequel le moulage est le moulage par injection.

11. Procédé selon l'une des revendications précédentes, dans lequel le produit est un rouge à lèvres.
